# EUROPÄISCHE PATENTSCHRIFT

(11) **EP 0 843 119 B1**
(45) Veröffentlichungstag und Bekanntmachung des Hinweises auf die Patenterteilung: **10.01.2001**
(21) Anmeldenummer: 97119519.3
(22) Anmeldetag: 07.11.1997
(51) Int. Cl.: F16L 5/04, F16L 5/00, H02G 3/22

(54) **Durchführung für mindestens ein Kabel oder Rohr durch eine Wand oder eine Decke**
Feedthrough for at least one cable or pipe passing through a wall or ceiling
Traversée d'au moins un câble ou un tuyau pour un mur ou un plafond

(30) Priorität: 16.11.1996 DE 29619943 U
(43) Veröffentlichungstag der Anmeldung: 20.05.1998
(73) Patentinhaber: Rigips GmbH, D-40549 Düsseldorf (DE)
(72) Erfinder: Borns, Erwin, 37619 Kirchbrak (DE); Fiedler, Adolf, 37619 Heyen (DE); Klobes, Klaus, Dipl.-Oec., 47877 Willich-Schiefbahn (DE); Wachs, Peter, Dipl.-Ing., 41468 Neuss (DE)
(74) Vertreter: Cohausz & Florack

(56) Entgegenhaltungen:
- EP-A- 0 707 168
- DE-A- 3 803 585
- DE-A- 3 840 997
- JP-A- 2 140 289
- US-A- 3 339 011
- US-A- 4 038 237

## Beschreibung

Die Erfindung betrifft Durchführung für mindestens ein Kabel oder Rohr durch eine Wand oder eine Decke, insbesondere durch eine Trockenbauwand oder -decke, mit einer in der Durchführungsöffnung sitzenden, einen größeren Innendurchmesser als das Kabel oder Rohr aufweisenden Außenschale, die aus mindestens zwei sich jeweils über die Gesamtlänge der Außenschale erstreckenden Schalenelementen zusammengesetzt ist, und mit einer den Raum zwischen der Außenschale und dem Kabel oder Rohr füllenden Füllung, welche aus einem feuerfesten Material besteht.

Um das Übergreifen eines in einem bestimmten Gebäudeteil entstandenen Brandes auf andere Gebäudeteile zu verhindern, besteht die gesetzliche Brandschutzvorschrift, daß die einzelnen Gebäudeteile gegeneinander durch geeignet ausgebildete Wände und Decken abzuschotten sind. Ein Problem bei der Brandschutzabschottung stellen die Verbindungsleitungen dar, die erforderlich sind, um die Gebäudeabschnitte durch haustechnische Installationen miteinander zu verbinden. Bei diesen haustechnischen Installationen kann es sich beispielsweise um Energieversorgungskabel, Telekommunikationsleitungen, Wasser-, Gas- und Abwasserrohre sowie um Leerrohre handeln, die für die nachträgliche Montage von Kabeln, u.ä. bestimmt sind. Diese Versorgungskabel oder -rohre werden in der Regel durch in die Brandschutzwände oder -decken eingeformte Durchführungen von einem Gebäudeabschnitt in den nächst benachbarten geführt.

Bei den Wanddurchführungen kann es sich um einfache Wanddurchbrüche oder gesondert errichtete Verbindungsschächte handeln. Wegen der besonderen Gefahr, die durch ein Übergreifen eines Brandes im Bereich der durch die Durchführungen gebildeten Verbindungen zwischen den einzelnen Abschnitten eines Gebäudes ausgehen kann, werden an die Abschottung der Durchführungen gegen Brand besonders hohe Anforderungen gestellt. Insbesondere wird gefordert, daß die Durchführungsabschottungen eine hohe Feuerwiderstandsdauer aufweisen.

Aus der EP 0 707 168 A1, die den nächst Kommenden Stand der Technik bildet, ist eine Rohrmanschette aus Metall zum Abschotten von durch Wände oder Decken hindurchführenden Rohren bekannt, die aus mehreren Hülsenteilen besteht, welche auf ihrer Innenseite mit einem unter Hitzeeinwirkung sich nach innen ausdehnenden feuerfesten Blähmaterial ausgekleidet sind. Nachteilig an dieser Kabeldurchführung ist insbesondere die durch die metallische Außenwand bedingte hohe Schalleitfähigkeit. Aus der DE 38 40 997 A1 ist ferner ein feuerbeständiger Kabelschacht mit einem doppelwandigem Blechmantel bekannt, zwischen dessen innerer und äußerer Blechwandung ein aktives Wärmeschutzmaterial eingebracht ist, das unter anderem Gips enthalten kann.

Die Aufgabe der Erfindung besteht darin, eine Durchführung der eingangs genannten Art derart auszugestalten, daß ihre Abschottung einfach herzustellen ist, wobei die Abschottung gleichzeitig eine den gesetzlichen Vorschriften entsprechenden Widerstand gegen das Übergreifen eines Brandes bilden soll.

Diese Aufgabe wird ausgehend von einer Durchführung der eingangs genannten Art erfindungsgemäß dadurch gelöst, daß die Außenschale aus einem Gipswerkstoff hergestellt ist, welcher durch Mineralfasern armiert ist.

Die erfindungsgemäße Durchführung ist gegenüber der Hitze eines Brandes durch eine Außenschale abgeschottet, die aus einem Gipswerkstoff besteht. Diese Außenschale hält den größten Anteil der Hitzeeinwirkung von dem durch die Durchführung geführten Rohr oder Kabel ab. Dabei ist die Außenschale durch mindestens zwei Schalenelementen gebildet, deren Länge jeweils gleich der Gesamtlänge der Außenschale ist. Die Außenschale ist somit in ihrer Längsrichtung geteilt. Diese Längsteilung ermöglicht es, die Außenschale auf einfache Weise in die für die Durchführung in die betreffende Wand oder Decke eingebrachte Öffnung einzusetzen, wobei das Einsetzen auch dann noch auf einfache Weise möglich ist, wenn die Außenschale erst bei schon montiertem Kabel oder Rohr angebracht werden kann.

Da die Außenschale durch einen mineralfaserverstärkten Gipswerkstoff gebildet ist, weist sie neben einer hohen Feuersicherheit eine ebenso hohe Formbeständigkeit auch bei hoher Belastung auf. Insbesondere ist bei der Verwendung von mineralfaserarmiertem Gipswerkstoff zur Herstellung der Außenschale die Gefahr des Ausbrechens der Kanten der Außenschale verhindert, wenn diese durch ein in der Durchführung verkantetes Kabel oder Rohr belastet wird.

Das Übermaß des Durchmessers des Innenraums der Außenschale gegenüber dem durch die Durchführung geführten Kabel oder Rohre stellt sicher, daß die Außenschale auch bei starker Wärmebelastung einen ausreichenden Schutzschild bildet. Dabei wird ein Durchtreten der Hitze durch den von der Außenschale umgebenden Raum durch die in diesen Raum eingefüllte Füllung verhindert, welche formschlüssig und dichtend nach Art eines Stopfens in den zwischen Außenschale und Kabel oder Rohr verbleibenden Raum eingefüllt ist.

Die Außenschale ist aus einem feuerfesten Gipswerkstoff hergestellt. Für diesen Zweck bevorzugt geeignet ist Alabastergips, der eine hohe Feuerfestigkeit aufweist.

Eine besonders einfach herzustellende und zu montierende Ausgestaltung der Erfindung ist dadurch gekennzeichnet, daß die Wandelemente der Außenschale als Halbschalen ausgebildet sind.

Die Herstellung der erfindungsgemäßen Durchführung kann desweiteren dadurch vereinfacht werden, daß jeweils an mindestens einer der sich in axialer Längsrichtung erstreckenden Randflächen der Schalenelemente mindestens ein Vorsprung und an mindestens der jeweils anderen Randfläche der Schalenelemente jeweils eine Vertiefung derart ausgebildet sind, daß bei zusammengesetzter Außenschale die Vorsprünge der einen Randfläche eines Schalenelementes in die Vertiefungen der an dieser Randfläche anliegenden Randfläche des nächstbenachbarten Schalenelements formschlüssig eingreifen. Besonders dann, wenn die Außenschale nach der Montage des Kabels oder Rohrs angebracht werden soll, ist es in diesem Zusammenhang günstig, wenn der Vorsprung und die Vertiefung auf der jeweiligen Randfläche des Schalenelements sich über dessen gesamte Länge erstrecken. Auf diese Wiese können die einzelnen Elemente der Außenschale nach Art von Nut-Federverbindungen miteinander verbunden werden.

Die Füllung des Raumes zwischen der Außenschale und dem Kabel oder Rohr läßt sich formgenau und auf einfache Weise dann herstellen, wenn die Füllung aus einem Brandschutzschaum gebildet ist.

In vielen Anwendungsfällen ist es darüber hinaus günstig, die Füllung aus mindestens zwei vorgefertigten Stopfenelementen zu bilden. Auch durch die Verwendung derartiger Stopfenelemente wird die Herstellbarkeit und die Montage der erfindungsgemäßen Durchführung vereinfacht.

Um ein Durchtreten von offenen Flammen oder großer Hitze durch die Fugen zwischen den Einzelelemente der Durchführung zu verhindern, sollten diese durch einen feuerfesten Dichtwerkstoff abgedichtet sein. Vorzugsweise sollte dabei als Dichtwerkstoff Brandschutzkitt verwendet werden.

Besonders wirkungsvoll ist die bei der erfindungsgemäß ausgebildeten Durchführung erreichte Abschottung gegenüber der Einwirkung von Hitze und offenen Flammen dann, wenn die Außenschale mindestens auf einer Wand- oder oder Deckenseite gegenüber jeweiligen Wand oder Decke vorsteht.

Nachfolgend wird die Erfindung anhand einer Ausführungsbeispiele darstellenden Zeichnung näher erläutert. Es zeigen:
- Figur 1: eine Durchführung für ein Rohr durch eine Wand in frontaler Ansicht;
- Figur 2: die Durchführung nach Figur 1 in einer längsgeschnittenen Ansicht;
- Figur 3: eine Durchführung für zwei Kabel in frontaler Ansicht;
- Figur 4: die Durchführung nach Figur 3 in einer längsgeschnittenen Ansicht;
- Figur 5: ein Schalenelement in frontaler Ansicht;
- Figur 6: eine Außenschale in ausschnittsweiser, vergrößerter frontaler Ansicht;
- Figur 7: eine weitere Ausführung einer Durchführung für ein Kabel in frontaler Ansicht;
- Figur 8: die Durchführung nach Figur 7 in längsgeschnittener Ansicht.

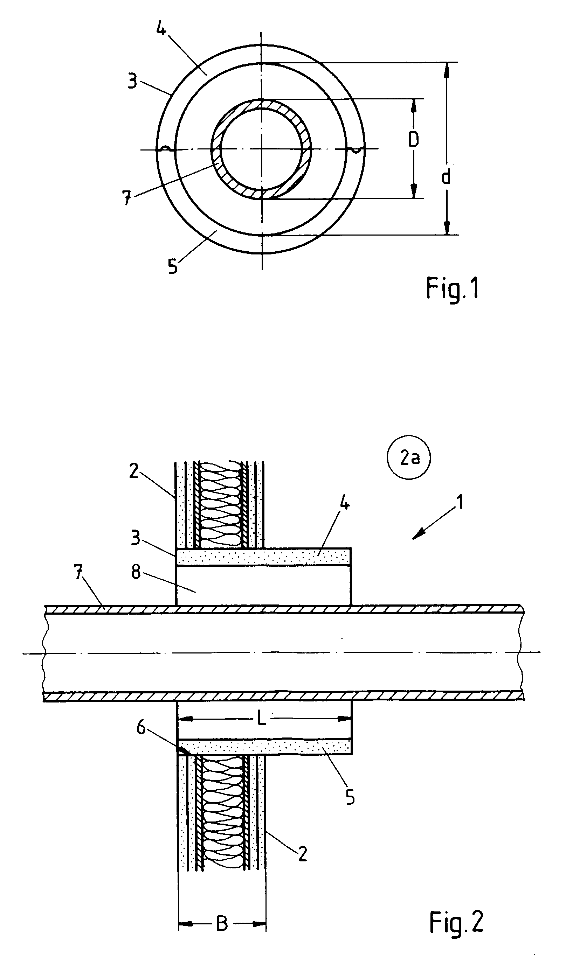

Die in den Figuren 1 und 2 gezeigte Durchführung 1 ist in eine unter Verwendung von feuerfesten Gipskartonplatten gebildete Trockenbauwand 2 eingebaut. Die Durchführung 1 ist mit einer eine zylindrische Form aufweisenden Außenschale 3 ausgestattet, die aus zwei halbschalenförmigen Schalenelementen 4, 5 zusammengesetzt ist. Die Außenschale 3 sitzt in der Durchführungsöffnung 6 der Trockenbauwand 2 ein. Ihre Länge L ist dabei doppelt so groß wie die Stärke B der Trockenbauwand 2, wobei die Außenschale 3 auf der einen Seite 2a der Trockenbauwand 2 über diese hinaussteht.

Der Innendurchmesser d der Außenschale 3 ist im Verhältnis zum Außendurchmesser D eines durch die Durchführung 1 koaxial geführten Rohres 7 so bemessen, daß entsprechend der derzeit geltenden DIN-Vorschriften (DIN 4102) maximal 60% des Innendruchmessers der Außenschale 3 mit dem Rohr 7 belegt sind. Der zwischen dem Rohr 7 und der Außenschale 3 verbleibende Raum ist durch eine Füllung 8 ausgefüllt, welche durch mehrere Stopfenelemente gebildet ist. Die Stopfenelemente der Füllung 8 sind aus einem Brandschutzschaum gebildet.

In jeweils eine der Randflächen 4a, 5a der Schalenelemente 4, 5 ist jeweils eine sich über die gesamte Länge L der Schalenelemente 4, 5 erstreckende Nut 4b, 5b eingeformt. Auf der jeweils anderen Randflächen 4c, 5c ist dagegen jeweils ein sich über die gesamte Länge L des jeweiligen Schalenelements 4, 5 erstreckender Vorsprung 4d, 5d derart ausgebildet. Bei zusammengesetzter Anformschale 3 sind die Schalenelemente 4, 5 durch die in die jeweilige Nut 4b, 5b eingreifenden Vorsprünge 5d, 4d formschlüssig miteinander verbunden.

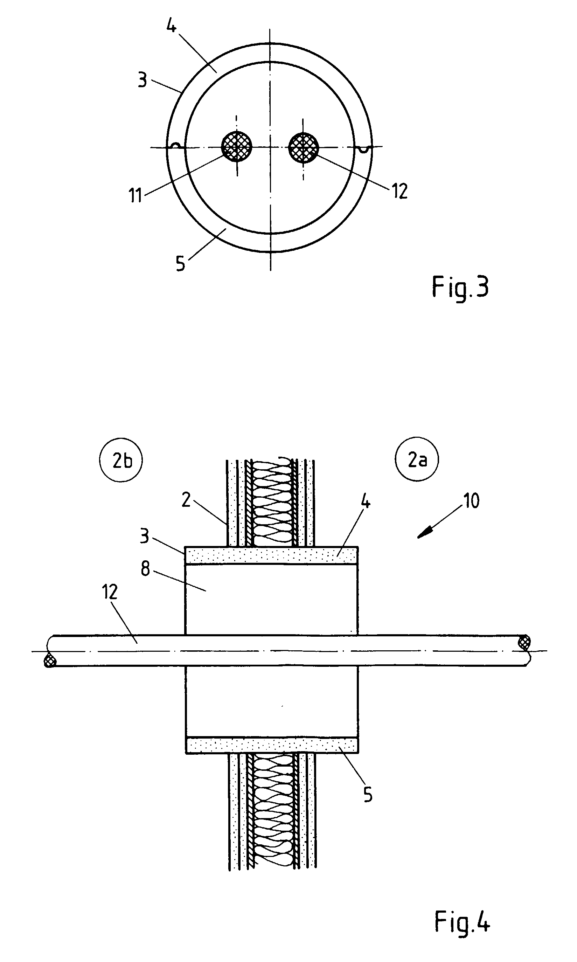

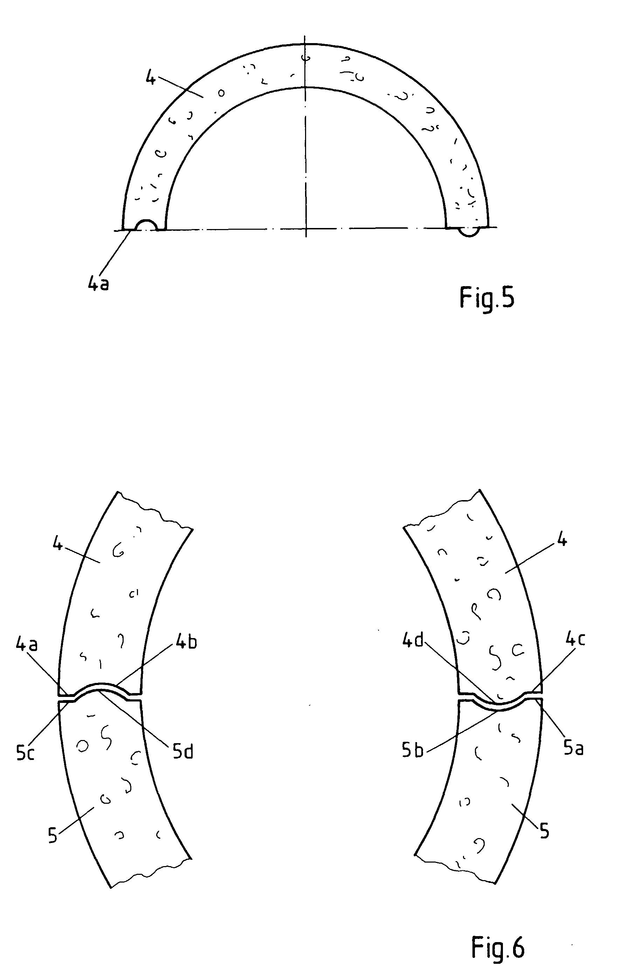

Die in den Figuren 3, 4 gezeigte Durchführung 10 entspricht in ihrem Aufbau der in den Figuren 1, 2 und 5, 6 gezeigten Durchführung 1. Im Unterschied zu der Durchführung 1 sind durch die Durchführung 10 zwei Kabel 11, 12 geführt. Ein weiterer Unterschied besteht darin, daß bei der Durchführung 10 die Außenschale 3 nicht nur über die eine Seite 2a der Trockenbauwand 2 hinaussteht, sondern auch vor deren andere Seite 2b. Selbstverständlich ist es ebenso möglich, ein Kabelbündel durch die Außenschale zu führen, wobei auch dabei zu beachten ist, daß in Übereinstimmung mit den derzeit geltenden DIN-Vorschriften maximal 60% des Innendurchmessers mit dem Kabelbündel belegt sein dürfen.

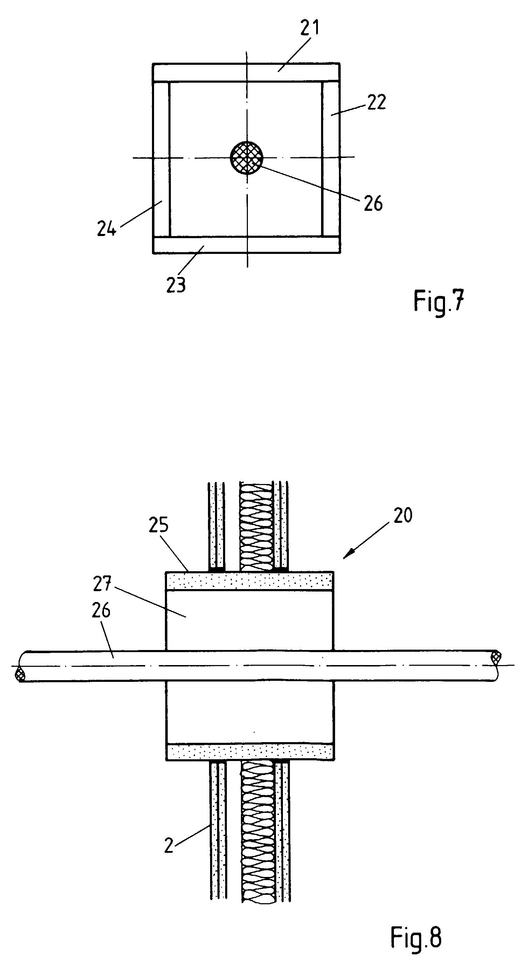

Die in den Figuren 7, 8 gezeigte Durchführung 20 weist eine aus plattenartigen Schalenelementen 21, 22, 23, 24 gebildete Außenschale 25 auf, welche eine quaderförmige Außenform hat. Wie bei den Durchführungen 1, 10 ist auch bei der Durchführung 20 der zwischen der Außenschale 25 und dem durch die Durchführung 20 geführten Kabel 26 verbleibende Raum durch eine aus mehreren Stopfenelementen gebildete Füllung 27 gefüllt. Ebenso wie bei den Durchführungen 1, 10 sind auch bei der Durchführung 20 sämtliche nach der Montage der Einzelelemente verbleibende Fugen mit einem Brandschutzkitt abgedichtet.

## Patentansprüche

1. Durchführung für mindestens ein Kabel oder Rohr (7) durch eine Wand (2) oder eine Decke, insbesondere durch eine Trockenbauwand oder -decke, mit einer in der Durchführungsöffnung sitzenden, einen größeren Innendurchmesser (d) als das Kabel oder Rohr (7) aufweisenden Außenschale (3;25), die aus mindestens zwei sich jeweils über die Gesamtlänge (L) der Außenschale (3;25) erstreckenden Schalenelementen (4,5) zusammengesetzt ist, und mit einer den Raum zwischen der Außenschale (3;25) und dem Kabel oder Rohr (7) füllenden Füllung, welche aus einem feuerfesten Material besteht, **dadurch gekennzeichnet, daß** die Außenschale (3;25) aus einem Gipswerkstoff hergestellt ist, welcher durch Mineralfasern armiert ist.

2. Durchführung nach Anspruch 1, **dadurch gekennzeichnet, daß** die Außenschale (3) aus Alabastergips hergestellt ist.

3. Durchführung nach einem der voranstehenden Ansprüche, **dadurch gekennzeichnet, daß** die Schalenelementen (4,5) der Außenschale (3) als Halbschalen ausgebildet sind.

4. Durchführung nach einem der voranstehenden Ansprüche, **dadurch gekennzeichnet, daß** jeweils an mindestens einer der sich in axialer Längsrichtung erstreckenden Randflächen (4a,5a) der Schalenelemente (4,5) mindestens ein Vorsprung (4d,5d) und an mindestens der jeweils anderen Randfläche (4c,5c) der Schalenelemente (4,5) jeweils eine Vertiefung derart ausgebildet sind, daß bei zusammengesetzter Außenschale (3) die Vorsprünge (4d,5d) der einen Randfläche (4a,5a) eines Schalenelements (4,5) in die Vertiefungen der an dieser Randfläche anliegenden Randfläche des nächstbenachbarten Schalenelements (4,5) formschlüssig eingreifen.

5. Durchführung nach Anspruch 4, **dadurch gekennzeichnet, daß** der Vorsprung und die Vertiefung auf der jeweiligen Randfläche (4a,5a,4c,5c) des Schalenelements (4,5) sich jeweils über dessen gesamte Länge (L) erstrecken.

6. Durchführung nach einem der voranstehenden Ansprüche, **dadurch gekennzeichnet, daß** die Füllung (27) aus einem Brandschutzschaum gebildet ist.

7. Durchführung nach einem der voranstehenden Ansprüche, **dadurch gekennzeichnet, daß** die Füllung (27) aus mindestens zwei vorgefertigten Stopfenelementen gebildet ist.

8. Durchführung nach einem der voranstehenden Ansprüche, **dadurch gekennzeichnet, daß** die Fugen zwischen den Einzelelementen der Durchführung (20) mittels eines feuerfesten Dichtwerkstoffs abgedichtet sind.

9. Durchführung nach Anspruch 8, **dadurch gekennzeichnet, daß** der Dichtwerkstoff Brandschutzkitt ist.

10. Durchführung nach einem der voranstehenden Ansprüche, **dadurch gekennzeichnet, daß** die Außenschale (25) mindestens auf einer Schalen- oder Deckenseite (21,22,23,24) gegenüber der jeweiligen Wand oder Decke vorsteht.

11. Durchführung nach Anspruch 10, **dadurch gekennzeichnet, daß** die Länge des vorstehenden Abschnitts der Außenschale (25) mindestens gleich der Stärke der Wand oder Decke (2) ist.

## Claims

1. A lead-in for at least one cable or pipe (7) through a wall (2) or a ceiling, more particularly a dry construction wall or ceiling, having: an outer shell (3; 25) which is disposed in the lead-in opening and has a larger internal diameter (d) than the cable or pipe (7) and is composed of at least two shell elements (4, 5) each extending over the total length (L) of the outer shell (3; 25); and a filling of a refractory material filling the space between the outer shell (3; 25) and the cable or pipe (7), **characterised in that** the outer shell (3; 25) is made from a gypsum material which is reinforced by mineral fibres.

2. A lead-in according to claim 1, **characterised in that** the outer shell (3) is made from alabastrite.

3. A lead-in according to one of the preceding claims, **characterised in that** the shell elements (4, 5) of the outer shell (3) take the form of half shells.

4. A lead-in according to one of the preceding claims, **characterised in that** at least one of the edge faces (4a, 5a) of the shell elements (4, 5) extending in the axial longitudinal direction is so formed with a projection (4d, 5d) and at least each of the other edge faces (4c, 5c) of the shell elements (4, 5) is so formed with a depression that when the outer shell (3) is assembled the projections (4d, 5d) of one edge face (4a, 5a) of one shell element (4, 5) engage positively in the depressions in that edge face of the nearest adjoining shell element (4, 5) which bears against said edge face.

5. A lead-in according claim 4, **characterised in that** the projection and the depression on the particular edge face (4a, 5a, 4c, 5c) of the shell element (4, 5) each extend over its total length (L).

6. A lead-in according to one of the preceding claims, **characterised in that** the filling (27) is formed by a fire protection foam.

7. A lead-in according to one of the preceding claims, **characterised in that** the filling (27) is formed by at least two prefabricated plug elements.

8. A lead-in according to one of the preceding claims, **characterised in that** the joints between the individual elements of the lead-in (20) are sealed by means of a refractory sealing material.

9. A lead-in according to claim 8, **characterised in that** the sealing material is fire protection mastic.

10. A lead-in according to one of the preceding claims, **characterised in that** the outer shell (25) projects from the wall or ceiling on at least one shell or ceiling side (21, 22, 23, 24).

11. A lead-in according to claim 10, **characterised in that** the length of the projecting portion of the outer shell (25) is at least equal to the thickness of the wall or ceiling (2) .

## Revendications

1. Traversée pour au moins un câble ou tube (7) au travers d'un mur (2) ou d'un plafond, en particulier une cloison sèche, avec une enveloppe externe (3 ; 25) placée dans l'orifice de la traversée, ayant un diamètre interne (d) supérieur au câble ou tube (7), qui est composé d'au moins deux éléments d'enveloppe (4, 5) se prolongeant chaque fois sur toute la longueur (L) de l'enveloppe externe (3, 25), et avec une charge remplissant l'espace entre l'enveloppe externe (3, 25) et le câble ou tube (7), lequel consiste en un matériau ignifuge, caractérisée en ce que l'enveloppe externe (3 ; 25) est préparée à partir d'une matière première en plâtre, qui est armée de fibres minérales.

2. Traversée suivant la revendication 1, caractérisée en ce que l'enveloppe externe (3) est préparée à partir de plâtre d'albâtre.

3. Traversée suivant l'une quelconque des revendications précédentes, caractérisée en ce que les éléments d'enveloppe (4, 5) de l'enveloppe externe (3) sont formés en tant que demi-enveloppe.

4. Traversée suivant l'une quelconque des revendications précédentes, caractérisée en ce que chaque fois sur au moins une des faces latérales (4a, 5a) se prolongeant dans la direction longitudinale axiale, des éléments d'enveloppe (4, 5), est formée chaque fois, au moins une saillie (4d, 5d) et sur au moins chaque autre face latérale (4c, 5c) de l'élément d'enveloppe (4,5), est formée chaque fois une cavité, de sorte que dans l'enveloppe externe (3) assemblée, la saillie (4d, 5d) de l'une des faces latérales (4a, 5a) d'un élément d'enveloppe (4, 5) s'accroche dans la cavité de la face latérale attenant à cette face latérale, de l'élément d'enveloppe (4, 5) le plus voisin.

5. Traversée suivant la revendication 4, caractérisée en ce que la saillie et la cavité se prolongent chaque fois, sur toute la longueur (L) de chaque face latérale (4a, 5a, 4c, 5c) des éléments d'enveloppe (4, 5).

6. Traversée suivant l'une quelconque des revendications précédentes, caractérisée en ce que la charge (27) est formée d'une mousse d'ignifugation.

7. Traversée suivant l'une quelconque des revendications précédentes, caractérisée en ce que la charge (27) est formée d'au moins deux éléments de blocage préfabriqués.

8. Traversée suivant l'une quelconque des revendications précédentes, caractérisée en ce que les rainures entre les éléments individuels de la traversée (20) sont étanchéifiés au moyen d'une matière première étanche ignifuge.

9. Traversée suivant la revendication 8, caractérisée en ce que la matière première étanche est un mastic d'ignifugation.

10. Traversée suivant l'une quelconque des revendications précédentes, caractérisée en ce que l'enveloppe externe (25) dépasse du mur ou au plafond au moins sur un côté du mur ou du plafond (21, 22, 23, 24).

11. Traversée suivant la revendication 10, caractérisée en ce que la longueur des segments en saillie de l'enveloppe externe (25) est au moins égale à celle de la profondeur du mur ou du plafond (2).
